Europäisches Patentamt

European Patent Office

Office européen des brevets

(19)

(11) Publication number: **0 150 519**
**A1**

# (12) EUROPEAN PATENT APPLICATION

(21) Application number: **84200122.4**

(22) Date of filing: **30.01.84**

(51) Int. Cl.⁴: **C 04 B 41/45, B 22 F 3/26**

(43) Date of publication of application: **07.08.85**
**Bulletin 85/32**

(84) Designated Contracting States: **DE FR GB NL**

(71) Applicant: **NEDERLANDSE CENTRALE ORGANISATIE VOOR TOEGEPAST-NATUURWETENSCHAPPELIJK ONDERZOEK, Juliana van Stolberglaan 148, NL-2595 CL The Hague (NL)**

(72) Inventor: **Van den Berg, Hendrik, Arthurgaarde 6, NL-7329 AC Apeldoorn (NL)**
Inventor: **Levelink, Herman Gerard, Puttenstein 3, NL-7339 BC Ugchelen (NL)**

(74) Representative: **van der Beek, George Frans et al, Nederlandsch Octrooibureau Johan de Wittlaan 15 P.O. Box 29720, NL-2502 LS 's-Gravenhage (NL)**

(54) **Method for producing an object of a composite material consisting of a body of a porous material and another material infiltrated into said body.**

(57) A method for manufacturing an object of a composite material in which first a body (7) of porous material having substantially the same shape and dimensions as the object is produced and thereafter said body is infiltrated with a material in the molten state, in particular a metal, by immersion of said body at least partially in a bath (12) of said molten material, a reduced pressure being created in said body at least during the period of time in which the porous body is kept immersed in the bath of molten material, which reduced pressure inside the body is preferably controlled when lifting the body from the bath. Advantageously said particulate material is poured into a die corresponding to said body of which at least one wall portion consists of a flexible sheet-like material (8) which later on vanishes by the high temperature of the bath, then a reduced pressure is created in the particulate material whereafter the die and the particulate material contained therein is immersed into the bath said reduced pressure being maintained.

Method for producing an object of a composite material
consisting of a body of a porous material and another
material infiltrated into said body.


The invention relates to a method for manufacturing an
object of a composite material in which first a body of a
porous material having substantially the same shape and
dimensions as the object is produced and thereafter said
body is infiltrated with a material in the molten state, in
particular a metal, by immersion of said body at least
partially in a bath of said molten material and sucking
away the gasses out of said porous body by means of a
reduced pressure, whereafter said body is lifted from said
bath and the infiltrated material is allowed to solidify by
cooling. Such a method is known from the article "Anwendung
der Infiltrationstechnik zur Cermetherstellung" in
"Berichte Deutscher Keramischen Gesellschaft" 48 (1971),
H6.

In the known method the porous body is produced in a
coherent form, e.g. by pressing and/or sintering at a high
pressure a particulate material in a die to which material
a binding agent has been added and thereafter a reduced
pressure is formed around said body to suck gasses out of
the body whereupon the body is immersed in a bath of molten
metal and above said bath a high gas pressure is created to
press the metal into the pores said reduced pressure being
removed.

The disadvantage of this known method is that for carrying
out said method a complicated apparatus, in particular a
autoclave is required by which the method and the articles
obtained thereby are expensive.

Moreover said body has to be removed very rapidly from the
bath as otherwise the molten metal will be permitted to flow out of the pores located at the surface so that an object having a bad surface condition would be obtained. However said rapid cooling of the body infiltrated with metal is hardly feasible in practice so that the objects obtained by the known method are not homogoneous but show surfaces having a different condition.

The object of the invention is to provide a method of the above mentioned type which does not show said deficiencies.

This object is obtained in that in the method according to the invention a reduced pressure is created in said body at least during the period of time in which the porous body is kept immersed in the bath of molten material.

In this way the metal infiltrates into the body at an excess pressure which is defined by the pressure differential between the pressure on said bath and the pressure which is maintained inside said body so that in most cases the atmospheric pressure on the metal bath will be sufficient for an improved infiltration of the molten material into the body of a porous material.

In that in the method according to the invention a reduced pressure is created inside the body itself, in an advantageous way said reduced pressure inside the body is controlled when lifting the body from the bath so that the molten metal is kept inside the pores whereby the surface condition of the article can be affected so that a smooth surface is obtained.

In this way articles are obtained having an outstanding surface condition.

Advantageously according to the invention the reduced pressure is already created before the body is immersed into the bath so that, according to the invention it is also not any more absolutely essential that said body has already a coherency by adding binding agents and/or by a sintering process. According to the invention particulate material is poured into a die of which at least one wall portion consists of a flexible sheet-like material which later on vanishes by the high temperature of the bath, e.g. a plastic or metal foil. Then a reduced pressure is created in the particulate material whereafter the die and the particulate material contained therein is immersed into the bath said reduced pressure being maintained.

In this way all disadvantages are obviated which attach to composing said body from a particulate material so that said body has already a coherency by adding binding agents and/or by a sintering process. Said disadvantages consist thereof that during the sintering process a rather strong shrinkage occurs and that the skin of binding agent is capable of disturbing the adhesion between grain and infiltrated material. In a sintering process in which the grains of a ceramic material are metallically bonded and the raw material consists of a mixture of a fine grained ceramic material and a metal powder, the melting point of the infiltrating material must be lower than the melting point of the metal used for the sintering process since otherwise the body would be distorted and disintegrate during the infiltration with the molten material.

It is noted that from the British patent specification 1342581 also a method as mentioned herein before is known for the manufacturing of metal-impregnated refractories in which a porous body of a refractory containing more than 50% by weight of magnesia or alumina is infiltrated with liquid aluminium by immersion of said body in a bath, it being proposed to assist the infiltration of the molten material by the application of a reduced pressure on the bath and the body immersed therein followed by the application of atmospheric pressure so that the infiltration is

-4-

still substantially effected by capillary action.

The invention will be described in more detail by referring
to the drawing in which:

Figure 1 shows schematically a first embodiment of the
method according to the invention, and
Figure 2 schematically shows a second embodiment of the
method according to the invention.

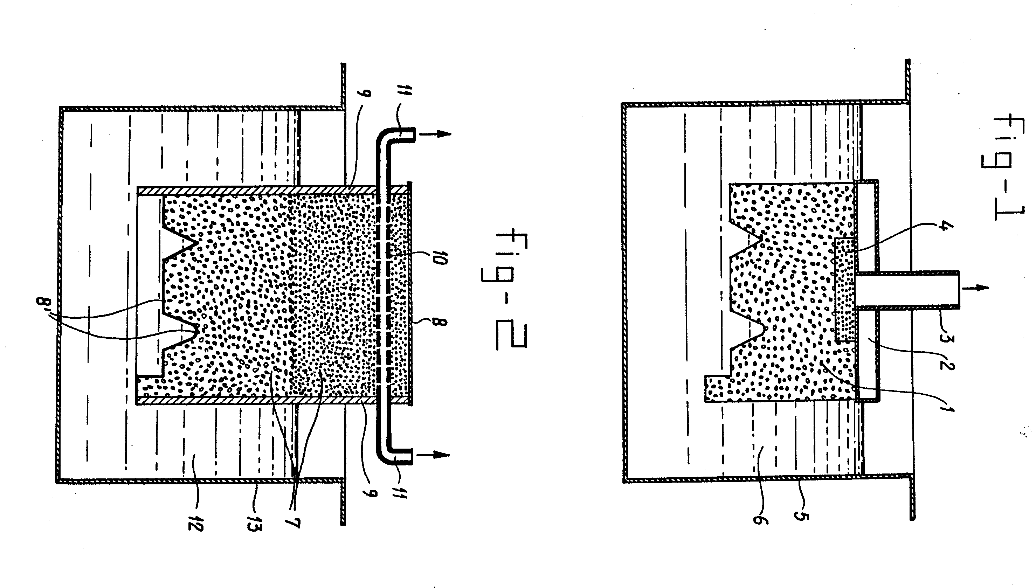

As shown in figure 1 a body 1 of a coherent porous material
is attached to a supporting means 2 through which a pipe 3
extends which is connected with a not shown source for the
creation of a reduced pressure. At its other end pipe 3 is
connected to a perforated element 4 disposed inside body 1.

The body 1 is completely immersed in bath 6 of molten
material contained in container 5 so that said molten
material 6 infiltrates into porous body 1, predemoninantly
by the pressure differential between the atmospheric
pressure above bath 6 and the reduced pressure inside body
1 which is created by means of the source for a reduced
pressure through pipe 3 and the perforated element 4.

The body 1 consists e.g. of grains of zirconium silicate
which are bonded by sodium silicate and a dispersion of a
polyacrylic-resin, and the bath 6 consists e.g. of a
molten aluminium alloy having a temperature of $700^{\circ}C$.

After the body 1 has been completely or partially
infiltrated with the molten material 6, what is obtained
after 20 to 90 seconds depending on the circumstances, body
1 is lifted from the bath 6 while the reduced pressure
inside body 1 is controlled during and directly after the
lifting step so that the molten material is kept inside the
pores.

In figure 2 a body 7 is shown which is composed of an incoherent particulate material which is confined between plastic foils 8, 8' and a casing 9 supporting the porous tube 10 which at both ends merges into a connection 11 for the connection with a not-shown source for a reduced pressure.

For forming the body 7 the first foil 8' is preheated and laid over a die (not shown) whereafter between the surface of the die and the foil a reduced pressure is drawn so that the foil 8' is drawn tightly over the surface of the die. Then the casing 9 with the porous tube 10 and the connections 11 is positioned and filled with the particulate material which material is subsequently compacted by vibrating. Finally the plastic foil 8 is laid on said compacted particulate material whereafter through connections 11 and porous tube 10 a reduced pressure is created inside the particulate material 7. The body formed this way is now separated from the die by removing the reduced pressure underneath the foil 8' the reduced pressure inside the particulate material being maintained.

As shown in figure 2 the body 7 formed this way is immersed in bath 12 of molten material contained into container 13 while the reduced pressure inside said body is maintained. Practically at once upon foil 8' coming into contact with the molten material 12 the plastic foil 8' is molten away by the high temperature of bath 12 so that the liquid material 12 is capable of infiltrating body 7 and filling the pores between the grains.

After the liquid material 12 has been infiltrated into the body, body 7 is raised from the bath 12 in the same way as described herein above for figure 1.

The porous bodies which are applied in the method according to the invention can be composed of particulate materials

-6-

of various types and compositions such as graphite, metals, metal oxides, carbides and minerals.

In the method as shown in figure 1 the particulate materials are mixed with binding agents which can be as well of the organic as of the anorganic type, such as silicates, phosphates, resins and mixtures thereof. Depending on the type of binding agent the required rigidity is obtained by chemical hardening, drying and/or sintering.

When the body is formed by means of a reduced pressure as described by referring to figure 2 no binding agents are added.

For the infiltrating material various metals and metal alloys can be applied such as aluminium, copper, cast iron, steel and alloys thereof while it is also possible to apply glass and ceramic melts.

By the particular way of shaping and by the material properties of the objects obtained by the method according to the invention, said objects are in particular suited for the application as lasting casting moulds, dies, material for heat engineering, armour material, material for fire and burglary protection, fire proof material and wear and erosion resistant material.

-------

## Claims

1. A method for manufacturing an object of a composite material in which first a body of a porous material having substantially the same shape and dimensions as the object is produced and thereafter said body is infiltrated with a material in the molten state, in particular a metal, by immersion of said body at least partially in a bath of said molten material and sucking away the gasses out of said porous body by means of a reduced pressure, whereafter said body is lifted from said bath and the infliltrated material is allowed to solidify by cooling,characterized in, that a reduced pressure is created in said body at least during the period of time in which the porous body is kept immersed in the bath of molten material.

2.A method according to claim 1, characterized in, that said reduced pressure inside the body is controlled when lifting the body from the bath.

3. A method according to claims 1 or 2, said body being composed of a particulate material, characterized in, that said particulate material is poured into a die corresponding to said body of which at last one wall portion consists of a flexible sheet-like material which later on vanishes by the high temperature of the bath, e.g. a plastic or metal foil, then a reduced pressure is created in the particulate material whereafter the die and the particlate material contained therein is immersed into the bath said reduced pressure being maintained.

-----

0150519

fig-1

fig-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 398 040 (ELECTRICITE DE FRANCE) <br> * page 1, left-hand column, lines 23-37, right-hand column, lines 33-35 * | 1 | C 04 B 41/45 <br> B 22 F 3/26 |
| A | FR-A-2 226 254 (G. MATTHEWS RESEARCH & DEVELOPMENT CO.) <br> * claim 1; page 9, lines 13-16 * | 1 | |
| D,A | GB-A-1 342 581 (DIDIER-WERKE) <br> * claim 1; page 2, lines 33-36 * | 1 | |
| A | US-A-4 002 708 (J.L. LOTT) <br> * column 5, lines 36-44 * | 1 | |
| A | DE-A-2 540 704 (R. WIHR) <br> * claim 1 * | 1 | TECHNICAL FIELDS SEARCHED (Int. Cl. ³) |
| A | US-A-3 310 427 (R.F. CHENEY et al.) <br> * claim 1 * | 3 | C 04 B 41/00 <br> C 22 C 1/00 <br> B 22 F 3/00 |
| A | DE-A-2 402 872 (TOYOTA) | | |

The present search report has been drawn up for all claims

| Place of search | Date of completion of the search | Examiner |
|---|---|---|
| THE HAGUE | 25-09-1984 | DAELEMAN P.C.A. |